# EUROPEAN PATENT SPECIFICATION

(11) **EP 2 580 413 B1**
(45) Date of publication and mention of the grant of the patent: **25.02.2015**
(21) Application number: 11741322.9
(22) Date of filing: 14.06.2011
(51) Int. Cl.: E05B 73/00

(54) **SECURITY AND INVENTORY MANAGEMENT TAG AND SYSTEM THEREFOR**
SICHERHEITS- UND BESTANDSVERWALTUNGSETIKETT SOWIE SYSTEM DAFÜR
ETIQUETTE DE SÉCURITÉ ET DE GESTION D'INVENTAIRE ET SYSTÈME ASSOCIÉ

(30) Priority: 14.06.2010 US 354419 P
(43) Date of publication of application: 17.04.2013
(73) Proprietor: Avery Dennison Corporation, Pasadena, CA 91103 (US)
(72) Inventor: RAYMOND, Jeffrey, A., Leominster, MA 01453 (US); COOPER, William, J., Natick, MA 01760 (US)
(74) Representative: Müller-Boré & Partner Patentanwälte PartG mbB
(86) International application number: PCT/US2011/040269
(87) International publication number: WO 2011/159651

(56) References cited:
- WO-A1-2006/055774
- WO-A1-2007/115537
- DE-A1- 4 417 821
- US-A1- 2009 224 918

## Description

### Field of the Invention

The present invention relates to security and inventory management tags. More particularly, the present invention is directed to a rigid tag structure which includes a locking mechanism to secure the tag to an article of commerce. The rigid tag includes a radio frequency device encased within the housing of the tag which can be used for inventory management as well as for security situations.

### Background of the Invention

Shoplifting is a prevalent concern in the marketplace, and there are many security devices that are used in connection with providing article security to address this concern. Many security devices require an alarm triggering system. Such systems typically require the device to be deactivated by a store clerk when a consumer properly purchases an item. If an individual attempts to steal an item, the security device remains active and will trigger a detection system at the entrance or exit of the store. This alarm will alert the staff that an individual is attempting to steal an item. The alarm, besides signaling a thief, may also signal that the device was not properly deactivated by clerk upon proper purchase by a consumer. Such devices commonly are called EAS devices and may use a resonating device which unfortunately can be easily defeated by experienced individuals.

It is often desired by retail stores to be able to inventory their stock of goods. For efficiency reasons, it is desired that a single device be able to provide inventory management, security functions that are not easily defeatable, and devices that serve as a visible deterrent to reduce the amount of shoplifting. It is also desired that such a device that is capable of providing a plurality of functions be cost efficient.

Document WO 2006/055774 A1 describes an electronic article surveillance security tag comprising a housing having a cavity formed therein, the housing having a base portion and a top portion, first and second longitudinally extending side edges, a first end and a second end, the second end tapered from the first end, the first end having a bulbous element. A radio frequency device is disposed within the cavity, and a locking mechanism is placed in the first end and extending vertically into the bulbous element. The base and top portion may be ultrasonically welded together, the base portion may be transparent.

Another merchandise security device is known from WO 2007/115537 A1 which describes a security tag with a tapered housing provided with a locking mechanism and a radio frequency device.

From document US 2009/0224918 A1 is furthermore a security tag known, the security tag comprising a inlay having a substrate with an antenna connected to an IC component.

The invention provides for an alternative security and inventory management tag.

### Brief Summary of the Invention

The embodiments of the present invention described below are not intended to be exhaustive or to limit the invention to the precise forms disclosed in the following detailed description.

In an embodiment of the presently described invention, a security and inventory management tag is described and includes a housing with a cavity formed therein. The housing has a base portion and a top portion, first and second longitudinally extending side edges and a first end and a second end. The second end is tapered from the first end. A radio frequency device is disposed within the cavity, the radio frequency device including an inlay having a substrate with an antenna and an integrated circuit coupled to the antenna.

In accordance with the invention, the first end has a bulbous element extending upwardly from the top portion and having an opening centrally disposed within the bulbous element.

A locking mechanism is placed in the first end and extends vertically into the bulbous element and upwardly to the opening.

In a preferred embodiments the antenna and the integrated circuit connected thereto are provided on a first substrate, such as PET and may then be sandwiched or laminated to further protect the RF device.

In a further aspect of the presently described invention, a security and inventory management system is described, that includes a consumer article and a security and inventory management tag in accordance with the invention. The security and inventory management tag is removably connected to the consumer article by the locking mechanism. By encasing the RFID device in a housing, the RFID device is protected from tampering by a thief who wishes to deactivate the RFID device in order to prevent detection.

In a yet further aspect of the presently described invention, a security and inventory management device for use with apparel items is described which comprises a security and inventory management tag in accordance with the invention. The housing furthermore has first and second longitudinally extending side edges that slope upwardly and inwardly from the base portion toward a central area of the top portion, the first end having an edge that is generally curvilinear. The base portion has a cylindrical aperture extending upwardly from the base portion and disposed substantially beneath the bulbous element. The antenna and integrated circuit are laminated in the substrate and operating in either a UHF, HF, or LF range.

The security and inventory management device further includes a locking mechanism that is disposed at least partially in the cylindrical aperture of the base portion and a pin disposed at least partially through the opening the bulbous element.

The security and inventory management device may be clear, transparent, translucent, colored or may have a combination of the foregoing schemes and may also be provided with advertising indicia on a portion of the security and inventory management device that matches or otherwise corresponds to the consumer article to which it is attached.

The housing is preferably ultrasonically welded together, that is the top and bottom portions are welded along the first and second longitudinally extending sides. The first and second longitudinally extending sides taper from the first end to the second end and slope inwardly toward a central area of the top portion of the housing.

Other features and advantages of the present invention will become apparent to those skilled in the art from the following detailed description. It is to be understood, however, that the detailed description of the various embodiments and specific examples, while indicating preferred and other embodiments of the present invention, are given by way of illustration and not limitation. Many changes and modifications within the scope of the present invention as defined by the appended claims may be made.

### Brief Description of the Drawings

These, as well as other objects and advantages of this invention, will be more completely understood and appreciated by referring to the following more detailed description of the presently preferred exemplary embodiments of the invention in conjunction with the accompanying drawings, of which:
FIGURE 1 depicts an exploded view of an exemplary security and inventory management tag;
FIGURE 2 provides an illustration of the completed security and inventory management tag of the presently described invention;
FIGURE 3 illustrates the security and inventory management tag connected to a consumer article; and
FIGURE 4 shows a security tag and inventory management with advertising indicia thereon.

### Detailed Description of the Invention

The apparatuses and methods disclosed in this document are described in detail by way of examples and with reference to the figures. Unless otherwise specified, like numbers in the figures indicate references to the same, similar, or corresponding elements throughout the figures. It will be appreciated that within the scope of the invention as defined by the appended claims, modifications to disclosed and described examples, arrangements, configurations, components, elements, apparatuses, methods, materials, etc. can be made and may be desired for a specific application. In this disclosure, any identification of specific shapes, materials, techniques, arrangements, etc. are either related to a specific example presented or are merely a general description of such a shape, material, technique, arrangement, etc. Identifications of specific details or examples are not intended to be, and should not be, construed as mandatory or limiting unless specifically designated as such. Selected examples of apparatuses and methods are hereinafter disclosed and described in detail with reference made to FIGURES.

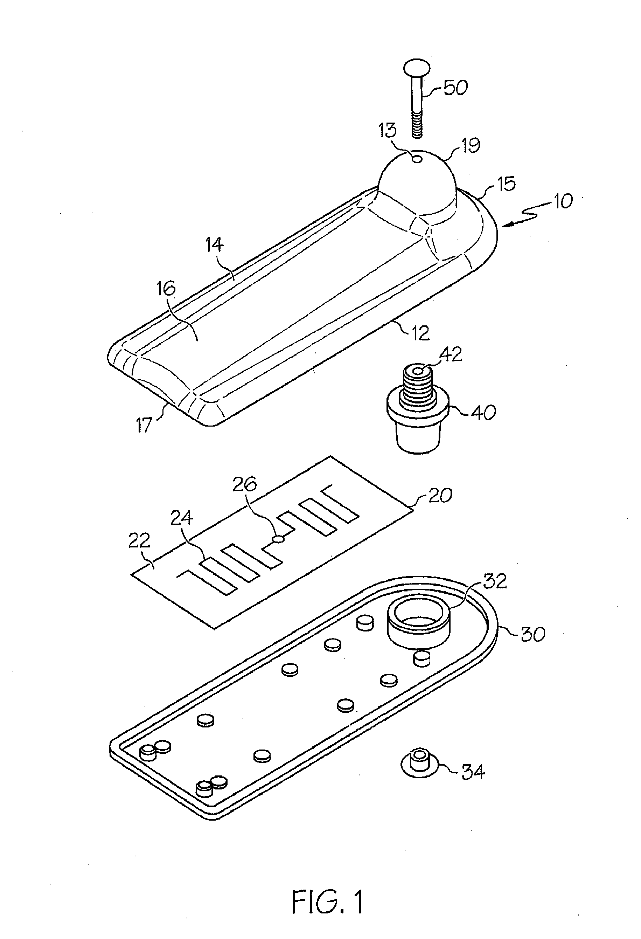

Reference is now directed to FIGURE 1 of the presently described invention which shows the security and inventory management device generally in an exploded view. A security and inventory management device for use with apparel items is described and includes a housing with a cavity formed therein. The housing has a base portion 30 and a top portion 10, first and second longitudinally extending side edges 12, 14, respectively, that slope upwardly and inwardly from the base portion 30 toward a central area 16 of the top portion 10, a first end and a second end, 15, 17, respectively, with the first end 15 having an edge that is generally curvilinear. The second end 17 is tapered from the first end 15. In accordance with the invention, first end 15 having a bulbous element 19 extending upwardly from the top portion 10 and having an opening 13 centrally disposed within the bulbous element 19.

The base portion 30 has a cylindrical aperture 32 extending upwardly from the base portion 30 and disposed substantially beneath the bulbous element 19. The security and inventory management tag includes a radio frequency device 20 disposed within the cavity in the housing. The radio frequency device 20 includes an inlay having a substrate 22 with an antenna 24 and an integrated circuit 26 coupled to the antenna 24. The antenna 24 and integrated circuit 26 are laminated in the substrate 22 and operate in the UHF (ultra high frequency) frequency, although other frequencies such as LF (low frequency) and HF (high frequency) are also possible.

The security and inventory management device of the presently described embodiment further includes a locking mechanism 40 that is placed in the first end 15 and extends vertically into the bulbous element 19 and upwardly to the opening 13 of the bulbous opening 19 and disposed at least partially in the cylindrical aperture 32 of the base portion 30 and a pin 50 disposed at least partially through the opening 13 the bulbous element 19.

A pin 50 or other fastener device is inserted through the opening 13 in the bulbous portion 19, through the opening 42 in the locking device 40 and the cylindrical aperture 32 in the base portion 30 to connect with a locking element 34 so as to secure the security and inventory management device to a consumer article. The locking device 40 can be a mechanical locking device such as a ball and clutch or a magnetic device.

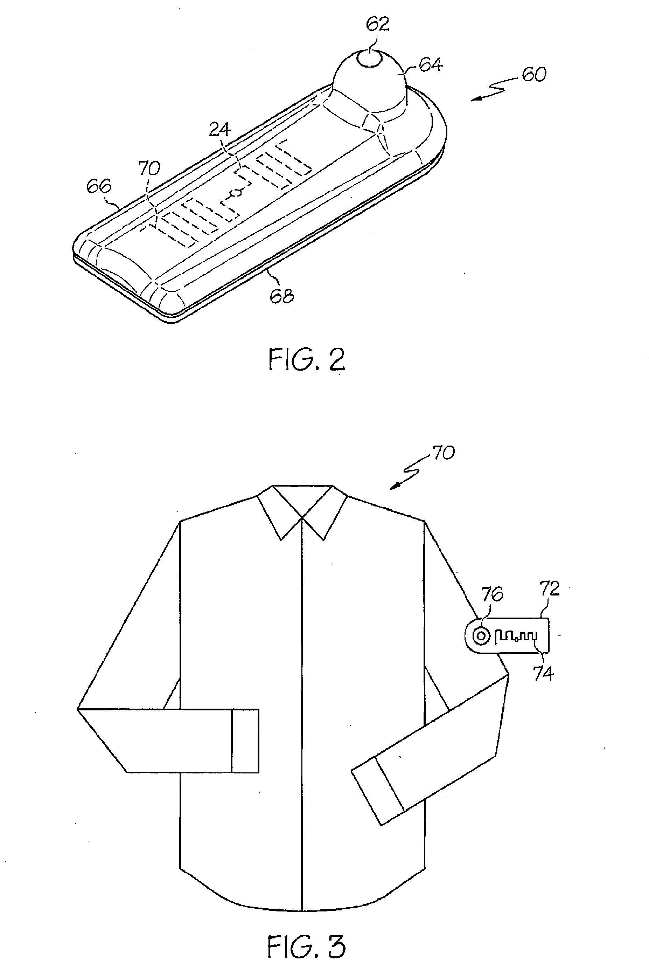

Turning now to FIGURE 2, the security and inventory management tag 60 is shown in its assembled configuration with the pin 62 inserted though the opening in the bulbous element 64. The security and inventory management tag 60 may be ultrasonically welded together along its first and second longitudinally extending sides 66, 68, respectively. The sides 66 and 68 slope generally upwardly and inwardly toward a central area 70 on the top portion of the tag 60. As can be seen from FIGURE 2, the tag slopes or tapers from the first end to the second end. In an exemplary embodiment, the RF element 24 is visible in the housing of the tag 60.

FIGURE 3 provides an illustration of the security and inventory management tag 72 connected to a consumer item 70, such as an apparel item (e.g. shirt, blouse, pants, sweater, and the like). The security and inventory management tag 72 is fastened by a pin 76 and locking mechanism as previously described. The RF element 74 is visible as the housing of the element 72 is clear or substantially transparent or translucent.

The device may be attached to another tag that may exhibit information about the apparel valuable to the consumer such as the price of the item. The device attached to a tag having information pertaining to an article may either be attached to apparel item piercing the item, or may be attached to an item via a SwifTach ^{®}.

The security and inventory management tag of the present invention may be attached to a lanyard which then may be attached to an article without the requirement that the security and inventory management device pierce the article. This is useful for more expensive items in which it would not be desirable to pierce the item, electronic articles, or other items in which it is difficult or impossible to pierce to the item to attach the security and inventory management device.

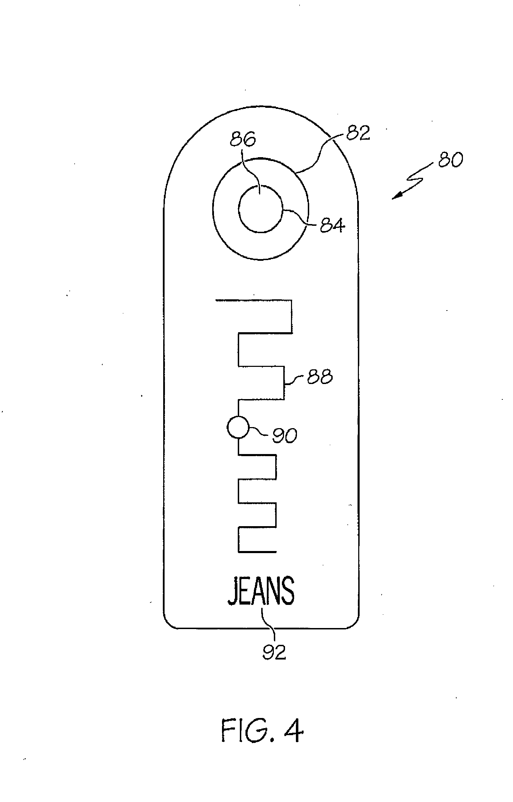

FIGURE 4 shows a front elevation of a security and inventory management tag 80 having a pin 84 disposed in the bulbous area 82 with opening 86. The RF device shown in the security and inventory management tag 80 includes an antenna 88 and integrated circuit (IC) 90. It is contemplated that the IC may be directly attached to the antenna 88 or comparatively coupled to the antenna. In one embodiment, an interposer such as a strap attachment may be used to couple the IC 90 to the antenna 88. The device is for example a RFID inlay provided by Avery Dennison RFID Company of Clinton, SC. In addition, the security and inventory management tag 80 is provided with advertising indicia 92 which may relate to the particular item to which the tag is associated with.

It is furthermore contemplated that the antenna may be of a variety of sizes and shapes.

The housing of the security and inventory management tag of the present invention may be manufactured from a relatively rigid material such as polycarbonate or ABS plastics or alternatively may be produced from recycled materials such as recycled PET.

The advertising indicia 90 may be molded into the security and inventory management tag assembly or may be imaged on top or on the bottom of the security and inventory management tag or may be provided by a pressure sensitive label that is applied to the security and inventory management tag. In addition to the housing being clear or substantially transparent or translucent, the tag may also be colored to stand out from the article or may be colored to better match the tag to the article to which it is attached or serve as part of the trade dress of a particular item or article of commerce.

The security and inventory management tag of the present invention has a dimension of roughly 2.54 centimeters (one inch) wide by about 6.4 or 7.6 centimeters (two and a half or three inches) in length. The first end has an elevation of about 10 mm (.4 inches) and the second end has an elevation of about 3.8 mm (.15 inches). The bulbous element as shown in FIGURE 1 has an elevation of about 13 mm (.5 inches) when measured from the base of the top portion.

The bottom portion of the security and inventory management tag has a thickness of about 2.5 mm (.1 inch) and the cylindrical aperture has an elevation when measured from the base of the bottom portion of about 2.5 mm (.1 inch). The cylindrical aperture and bulbous element have an opening of about 10 mm (.4 inches) to accommodate the locking element.

It is also contemplated that the inlay be removed from the remainder of the device in order to provide a "dummy" like tag which serves as a deterrence to thieves.

The security and inventory management device of the present invention is also capable of being recycled when utilizing both materials for the housing and inlay that is capable of being recycled.

While the invention has been described in connection with what is presently considered to be the most practical and preferred embodiment, it will be apparent to those of ordinary skill in the art that the invention is not to be limited to the disclosed embodiment, and that many modifications and equivalent arrangements may be made thereof within the scope of the invention, which is defined the appended claims.

## Claims

1. A security and inventory management tag (60; 72; 80), comprising;
a housing having a cavity formed therein, the housing having a base portion (30) and a top portion (10), first and second longitudinally extending side edges (12, 14), a first end and a second end (15, 17), the second end (17) tapered from the first end (15), the first end (15) having a bulbous element (19) extending upwardly from the top portion (10) and having an opening (13) centrally disposed within the bulbous element (19);
a radio frequency device (20) disposed within the cavity, the radio frequency device (20) including an inlay having a substrate (22) with an antenna (24) and an integrated circuit (26) coupled to the antenna (24); and
a locking mechanism (40) placed in the first end (15) and extending vertically into the bulbous element (19) and upwardly to the opening (13).

2. A tag (60; 72; 80) as recited in claim 1, wherein the antenna (24) and integrated circuit (26) are laminated between two sheets of material defining the substrate (22).

3. A tag (60; 72; 80) as recited in claim 1 or claim 2, wherein the housing is constructed from a group including recycled plastic material, polycarbonate, ABS plastic and combinations thereof and/or
wherein the radio frequency device is at least partially visible in the housing.

4. A tag (60; 72; 80) as recited in any of the preceding claims, wherein the housing is one of clear, transparent, translucent, colored or partially colored or combinations thereof.

5. A tag (60; 72; 80) as recited in any of the preceding claims, wherein the top portion (10) of the housing is tapered from the first end (15) to the second end (17) and the bottom portion of the housing is generally planar.

6. A tag (60; 72; 80) as recited in any of the preceding claims, a locking pin sized and configured to fit at least partially through the opening (13) in the bulbous element (19).

7. A tag (60; 72; 80) as recited in any of the preceding claims, wherein the bottom portion includes a circular aperture disposed adjacent the first end (15) and disposed beneath and in alignment with the bulbous elements (19).

8. A tag (60; 72; 80) as recited in any of the preceding claims, wherein the first and second longitudinally extending sides slope upwardly and inwardly towards a central area of the top portion (10).

9. A tag (60; 72; 80) as recited in any of the preceding claims, wherein the first end (15) has an edge that is curvilinear and the second end (17) has an edge that is generally perpendicular to each of the first and second longitudinally extending sides.

10. A security and inventory management system, comprising:
a consumer article;
a security and inventory management tag (60; 72; 80) as recited in claim 1 or claim 4; and
the security and inventory management tag (60; 72; 80) is removably connected to the consumer article by the locking mechanism (40).

11. A system as recited in claim 10, wherein the security and inventory management tag (60; 72; 80) is provided with advertising indicia corresponding to the consumer article.

12. A system as recited in any one of claims 10 or 11, wherein the radio frequency device (20) operates in one of UHF, HF or LF frequencies, and/or
wherein the consumer article is an apparel item.

13. A security and inventory management device for use with apparel items, comprising:
a security and inventory management tag (60; 72; 80) as recited in claim 1, wherein
the first and second longitudinally extending side edges (12, 14) of the housing slope upwardly and inwardly from the base portion (30) toward a central area of the top portion (10), the first end (15) having an edge that is generally curvilinear and the base portion (30) having a cylindrical aperture extending upwardly from the base portion (30) and disposed substantially beneath the bulbous element (19);
the antenna (24) and integrated circuit (26) laminated in the substrate (22) and operating in a UHF frequency; and
the locking mechanism (40) disposed at least partially in the cylindrical aperture of the base portion (30) and a pin disposed at least partially through the opening (13) the bulbous element (19).

14. A device as provided in claim 13, wherein the security and inventory management device includes advertising indicia.

15. A device as provided in any of the preceding claims, wherein the top portion (10) is ultrasonically welded or ultrasonically bonded to the bottom portion along each of the first and second longitudinally extending sides.

## Patentansprüche

1. Sicherheits- und Bestandsverwaltungsetikett (60; 72; 80), das umfasst:
ein Gehäuse mit einem darin ausgebildeten Hohlraum, wobei das Gehäuse einen Basisabschnitt (30) und einen oberen Abschnitt (10), erste und zweite sich längs erstreckende Seitenränder (12, 13), ein erstes Ende und ein zweites Ende (15, 17) hat, wobei das zweite Ende (17) von dem ersten Ende (15) konisch zuläuft, wobei das erste Ende (15) ein knolliges Element (19) hat, das sich von dem oberen Abschnitt (10) aufwärts erstreckt und eine Öffnung (13) hat, die in dem knolligen Element (19) zentral angeordnet ist;
eine Funkfrequenzvorrichtung (20), die in dem Hohlraum angeordnet ist, wobei die Funkfrequenzvorrichtung (20) eine Einlage mit einem Substrat (22) mit einer Antenne (24) und einer integrierten Schaltung (26), die mit der Antenne (24) gekoppelt ist, umfasst; und
einen Sperrmechanismus (40), der in dem ersten Ende (15) angeordnet ist und sich vertikal in das knollige Element (19) und aufwärts zu der Öffnung (13) erstreckt.

2. Etikett (60; 72; 80) nach Anspruch 1, wobei die Antenne (24) und die integrierte Schaltung (26) zwischen zwei Materialschichten laminiert sind, die das Substrat (22) definieren.

3. Etikett (60; 72; 80) nach Anspruch 1 oder Anspruch 2, wobei das Gehäuse aus einer Gruppe ausgewählt ist, die aus rückgewonnenem Kunststoffmaterial, Polykarbonat, ABS-Kunststoff und Kombinationen davon ausgewählt ist, und/oder
wobei die Funkfrequenzvorrichtung wenigstens teilweise in dem Gehäuse sichtbar ist.

4. Etikett (60; 72; 80) nach einem der vorhergehenden Ansprüche, wobei das Gehäuse ein klares, transparentes, transluzentes, farbiges oder teilweise farbiges oder daraus kombiniertes Gehäuse ist.

5. Etikett (60; 72; 80) nach einem der vorhergehenden Ansprüche, wobei der obere Abschnitt (10) des Gehäuses von dem ersten Ende (15) zu dem zweiten Ende (17) konisch zuläuft und der untere Abschnitt des Gehäuses im Allgemeinen eben ist.

6. Etikett (60; 72; 80) nach einem der vorhergehenden Ansprüche, wobei ein Sperrstift dimensioniert und aufgebaut ist, um wenigstens teilweise durch die Öffnung (13) in den knolligen Element zu passen.

7. Etikett (60; 72; 80) nach einem der vorhergehenden Ansprüche, wobei der untere Abschnitt einen kreisförmigen Ausschnitt umfasst, der benachbart zu dem ersten Ende (15) angeordnet ist und unterhalb und in Ausrichtung mit dem knolligen Elementen (19) angeordnet ist.

8. Etikett (60; 72; 80) nach einem der vorhergehenden Ansprüche, wobei die ersten und zweiten sich längs erstreckenden Seiten sich aufwärts und einwärts in Richtung einer zentralen Fläche des oberen Abschnitts (10) neigen.

9. Etikett (60; 72; 80) nach einem der vorhergehenden Ansprüche, wobei das erste Ende (15) einen Rand hat, der gekrümmt ist, und das zweite Ende (17) einen Rand hat, der im Allgemeinen senkrecht zu jeder der ersten und zweiten sich längs erstreckenden Seiten ist.

10. Sicherheits- und Bestandsverwaltungssystem, das umfasst:
einen Verbraucherartikel;
ein Sicherheits- und Bestandsverwaltungsetikett (60; 72; 80) nach Anspruch 1 oder Anspruch 4; und
wobei das Sicherheits- und Bestandsverwaltungsetikett (60; 72; 80) durch den Sperrmechanismus (40) abnehmbar mit dem Verbraucherartikel verbunden ist.

11. System nach Anspruch 10, wobei das Sicherheits- und Bestandsverwaltungsetikett (60; 72; 80) mit Werbehinweisen versehen ist, die zu dem Verbraucherartikel gehören.

12. System nach einem der Ansprüche 10 oder 11, wobei die Funkfrequenzvorrichtung (20) bei UHF-, HF- oder NF-Frequenzen arbeitet und/oder wobei der Verbraucherartikel ein Bekleidungsgegenstand ist.

13. Sicherheits- und Bestandsverwaltungssystem für die Verwendung mit Bekleidungsgegenständen, das umfasst:
ein Sicherheits- und Bestandsverwaltungsetikett (60; 72; 80) nach Anspruch 1, wobei
die ersten und zweiten sich längs erstreckenden Seitenränder (12, 14) des Gehäuses sich von dem Basisabschnitt (30) aufwärts und einwärts in Richtung einer zentralen Fläche des oberen Abschnitts (10) neigen, wobei das erste Ende (15) einen Rand hat, der im Allgemeinen gekrümmt ist, und der Basisabschnitt (30) einen zylindrischen Ausschnitt hat, der sich von dem Basisabschnitt (30) aufwärts erstreckt und im Wesentlichen unterhalb des knolligen Elements (19) angeordnet ist;
die Antenne (24) und die integrierte Schaltung (26) in dem Substrat (22) laminiert sind und bei einer UHF-Frequenz arbeiten; und
der Sperrmechanismus (40) wenigstens teilweise in dem zylindrischen Ausschnitt des Basisabschnitts (30) angeordnet ist, und ein Stift wenigstens teilweise durch die Öffnung (13) des knolligen Elements (19) angeordnet ist.

14. Vorrichtung nach Anspruch 13, wobei das Sicherheits- und Bestandsverwaltungssystem Werbehinweise umfasst.

15. Vorrichtung nach einem der vorhergehenden Ansprüche, wobei der obere Abschnitt (10) entlang jeder der ersten und zweiten sich längs erstreckenden Seiten an den unteren Abschnitt ultraschallgeschweißt ist oder mit ihm ultraschallverklebt ist.

## Revendications

1. Etiquette de sécurité et de gestion d'inventaire (60 ; 72 ; 80) comprenant :
un logement ayant une cavité formée en son sein, le logement ayant une portion de base (30) et une portion supérieure (10), des premier et second bords latéraux (12, 14) s'étendant longitudinalement, une première extrémité et une seconde extrémité (15, 17), la seconde extrémité (17) étant conique depuis la première extrémité (15), la première extrémité (15) ayant un élément renflé (19) s'étendant vers le haut depuis la portion supérieure (10) et ayant une ouverture (13) disposée de manière centrale au sein de l'élément bulbeux (19) ;
un dispositif à radiofréquence (20) disposé au sein de la cavité, le dispositif à radiofréquence (20) incluant une incrustation ayant un substrat (22) avec une antenne (24) et un circuit intégré (26) raccordé à l'antenne (24) ; et
un mécanisme de verrouillage (40) placé dans la première extrémité (15) et s'étendant verticalement dans l'élément renflé (19) et vers le haut vers l'ouverture (13).

2. Etiquette (60 ; 72 ; 80) selon la revendication 1, dans laquelle l'antenne (24) et le circuit intégré (26) sont laminés entre deux feuilles de matériau définissant le substrat (22).

3. Etiquette (60 ; 72 ; 80) selon la revendication 1 ou la revendication 2, dans laquelle le logement est construit à partir d'un groupe incluant un matériau de plastique recyclé, du polycarbonate, du plastique ABS et des combinaisons de ceux-ci et/ou
dans laquelle le dispositif à radiofréquence est au moins partiellement visible dans le logement.

4. Etiquette (60 ; 72 ; 80) selon l'une quelconque des revendications précédentes, dans laquelle le logement a un aspect parmi clair, transparent, translucide, coloré ou partiellement coloré ou des combinaisons de ceux-ci.

5. Etiquette (60 ; 72 ; 80) selon l'une quelconque des revendications précédentes, dans laquelle la portion supérieure (10) du logement est conique de la première extrémité (15) à la seconde extrémité (17) et la portion inférieure du logement est généralement plane.

6. Etiquette (60 ; 72 ; 80) selon l'une quelconque des revendications précédentes, une goupille de verrouillage dimensionnée et configurée pour s'ajuster au moins partiellement à travers l'ouverture (13) dans l'élément renflé (19).

7. Etiquette (60 ; 72 ; 80) selon l'une quelconque des revendications précédentes, dans laquelle la portion inférieure inclut une ouverture circulaire disposée de manière adjacente à la première extrémité (15) et disposée en dessous de et en alignement avec les éléments renflés (19).

8. Etiquette (60 ; 72 ; 80) selon l'une quelconque des revendications précédentes, dans laquelle les premier et second côtés s'étendant longitudinalement sont inclinés vers le haut et vers l'intérieur vers une zone centrale de la portion supérieure (10).

9. Etiquette (60 ; 72 ; 80) selon l'une quelconque des revendications précédentes, dans laquelle la première extrémité (15) a un bord qui est curviligne et la seconde extrémité (17) a un bord qui est généralement perpendiculaire à chacun des premier et second côtés s'étendant longitudinalement.

10. Système de sécurité et de gestion d'inventaire comprenant :
un article de consommation ;
une étiquette de sécurité et de gestion d'inventaire (60 ; 72 ; 80) selon la revendication 1 ou la revendication 4 ; et
l'étiquette de sécurité et de gestion d'inventaire (60 ; 72 ; 80) est connectée de manière amovible à l'article de consommation par le mécanisme de verrouillage (40).

11. Système selon la revendication 10, dans lequel l'étiquette de sécurité et de gestion d'inventaire (60 ; 72 ; 80) est pourvue d'indices de publicité correspondant à l'article de consommation.

12. Système selon l'une quelconque des revendications 10 ou 11, dans lequel le dispositif à radiofréquence (20) opère dans une de fréquences UHF, HF ou LF, et/ou
dans lequel l'article de consommation est un article d'habillement.

13. Dispositif de sécurité et de gestion d'inventaire destiné à être utilisé avec des articles d'habillement, comprenant :
une étiquette de sécurité et de gestion d'inventaire (60 ; 72 ; 80) selon la revendication 1, dans lequel
les premier et second bords latéraux (12, 14) s'étendant longitudinalement du logement sont inclinés vers le haut et vers l'intérieur depuis la portion de base (30) vers une zone centrale de la portion supérieure (10), la première extrémité (15) ayant un bord qui est généralement curviligne et la portion de base (30) ayant une ouverture cylindrique s'étendant vers le haut depuis la portion de base (30) et disposée essentiellement en dessous de l'élément renflé (19) ;
l'antenne (24) et le circuit intégré (26) laminés dans le substrat (22) et opérant dans une fréquence UHF ; et
le mécanisme de verrouillage (40) disposé au moins partiellement dans l'ouverture cylindrique de la portion de base (30) et une goupille disposée au moins partiellement à travers l'ouverture (13) l'élément renflé (19).

14. Dispositif selon la revendication 13, dans lequel le dispositif de sécurité et de gestion d'inventaire inclut des indices de publicité.

15. Dispositif selon l'une quelconque des revendications précédentes, dans lequel la portion supérieure (10) est soudée de manière ultrasonique ou collée de manière ultrasonique à la portion inférieure le long de chacun des premier et second côtés s'étendant longitudinalement.
